# EUROPÄISCHE PATENTSCHRIFT

(11) **EP 0 628 374 B1**
(45) Veröffentlichungstag und Bekanntmachung des Hinweises auf die Patenterteilung: **04.12.1996**
(21) Anmeldenummer: 94108205.9
(22) Anmeldetag: 28.05.1994
(51) Int. Cl.: B23K 23/00, E01B 11/52

(54) **Verfahren zur Zwischengussschweissung feinperlitisierter Schienen**
Process for the intermediate cast welding of isothermical annealed rails
Méthode de soudage par coulée intermédiaire de rails recuits de microperlitisation

(30) Priorität: 11.06.1993 DE 4319417
(43) Veröffentlichungstag der Anmeldung: 14.12.1994
(73) Patentinhaber: Elektro-Thermit GmbH, D-45139 Essen (DE)
(72) Erfinder: Kuster, Frank, Dr., D-40883 Ratingen (DE)
(74) Vertreter: Rotenberg, Klaus, Dr.

(56) Entgegenhaltungen:
- DE-A- 2 161 134
- DE-A- 2 208 692

## Beschreibung

Die Erfindung betrifft ein Verfahren zur Zwischengußschweißung feinperlitisierter Schienen durch Eingießen aluminothermisch erzeugten Stahles in eine die beiden Schienenenden umgebende Gießform.

Die Erfindung betrifft insbesondere ein Verfahren zur Zwischengußschweißung feinperlitisierter Schienen, bei denen die an die Schweißnaht beidseitig angrenzenden Schienenkopfbereiche eine erhöhte, der feinperlitisierten Schiene angenäherte Schienenfestigkeit aufweisen.

Der Verschleiß einer Schiene wird bei gegebener Beanspruchung unter dem Fahrbetrieb im wesentlichen von der Schienenfestigkeit bzw. der Härte bestimmt. Zur Zeit verwenden die Eisenbahnen in ihren durchgehend geschweißten Gleisen zum überwiegenden Teil naturharte Schienen mit einer Mindestzugfestigkeit von 900 N/mm². Dabei stehen dem Schienenhersteller zum Erreichen der Schienenfestigkeit die Legierungselemente Kohlenstoff und Mangan zur Verfügung. Bei stark erhöhter Beanspruchung, wie sie z.B. an Bogenaußenschienen in Kurven vorliegt, kommt auch die naturharte, zusätzlich mit Chrom und/oder Vanadin legierte Sondergüte mit 1100 N/mm² Mindestzugfestigkeit zum Einsatz.

Alternativ zur naturharten, legierten Sondergüte besteht auch die Möglichkeit, hohe Festigkeiten durch eine Wärmebehandlung der Schienen nach dem Walzvorgang zu erzielen. Im allgemeinen ist es üblich, die Wärmebehandlung auf den fahrflächennahen Bereich der Schienen zu beschränken. Solche Schienen entsprechen in ihrer chemischen Zusammensetzung etwa den Schienen mit 900 N/mm² Mindestzugfestigkeit, wobei das perlitische Gefüge aufgrund der Wärmebehandlung äußerst feinlamellar ist, mit der Folge einer entsprechend hohen Härte bzw. Festigkeit. Die vorliegende Erfindung betrifft die Verbesserung des Härteverlaufs in aluminothermisch erzeugten Schweißstellen im Kopfbereich dieses Schienentyps.

Das aluminothermische Schweißverfahren führt als Schmelzschweißverfahren zu einer charakteristischen Ausbildung des Schweißbereiches in Form eines Zwischengußbereiches, der aus aluminothermisch erzeugtem Stahl und aufgelöstem Schienenstahl besteht und sich zentral in der ursprünglich vorhandenen Schweißlücke zwischen den beiden Schienenenden befindet, sowie je einer Wärmeeinflußzone rechts und links von der Schweißnaht.

Figur 1A zeigt diese Bereiche anhand eines perspektivischen Teillängsschnitts durch die Symmetrieebene einer feinperlitisierten (kopfgehärteten) Schiene in schematischer Darstellung. Dabei ist mit 1 der Zwischengußbereich, bestehend aus aluminothermisch erzeugtem Stahl und aufgeschmolzenem Schienenstahl bezeichnet. Begrenzt durch die Schmelzlinien 2 schließen sich beidseits die Wärmeeinflußzonen 3 an, die in den Bereich des wärmeunbeeinflußten Schienenstahls 4 übergehen. Mit 5 ist der feinperlitisierte Schienenkopfbereich bezeichnet.

Für das Verschleißverhalten unter dem Fahrbetrieb ist diese Ausbildung außerordentlich bedeutsam. Die Härte und damit gleichbedeutend die Festigkeit der Schweißnaht und somit auch deren Verschleißwiderstand können bei gegebener Abkühlungsgeschwindigkeit recht genau von der chemischen Zusammensetzung des aluminothermischen Stahls beeinflußt werden. Die Härte des Zwischengußbereiches stellt daher aus verschleißtechnischer Sicht kein Problem für die Schienenschweißung dar. Innerhalb der beiden Wärmeeinflußzonen liegen die Verhältnisse jedoch anders. Hier bestimmen die chemische Zusammensetzung und die Abkühlungsgeschwindigkeit gemeinsam die Härteverteilung. In Schienenlängsrichtung gesehen nimmt die Härte innerhalb der Wärmeeinflußzonen mit zunehmender Entfernung von der Schweißnahtmitte in Schienenlängsrichtung X ständig ab, bis ein Minimalwert an der Grenze der Wärmeeinflußzone zum wärmeunbeeinflußten Schienenstahl durchschritten wird.

Hier liegt die sogenannte Weichglühzone vor. Da mit abnehmender Härte auch der Verschleißwiderstand geringer wird, ist unter dem Fahrbetrieb mit einem erhöhten Verschleiß insbesondere in den Wärmeeinflußzonen zu rechnen.

Die geringe Härte innerhalb der Wärmeeinflußzonen ist auf metallphysikalische Ursachen zurückzuführen. In dem größten Teil der Wärmeeinflußzonen, angrenzend an den Zwischengußbereich, wird der Schienenstahl austenitisiert, während im weiter von der Schweißnaht entfernt liegenden Teil der Wärmeeinflußzonen eine maximale Temperatur in der Schiene von 600 bis 700°C erreicht wird. Während der Abkühlung der Schweißung scheiden sich unterschiedliche Gefügestrukturen in den Wärmeeinflußzonen aus:
- an der Schmelzlinie, d.h. am Übergang Zwischengußbereich/Wärmeeinflußzone z.B. ein grobkörniger, harter Perlit;
- am Übergang Wärmeeinflußzone/wärmeunbeeinflußter Schienenstahl, d.h. am Ende der Wärmeeinflußzonen, ein eingeformter kugeliger, weicher Perlit.

Da die Abkühlungsgeschwindigkeit der aluminothermischen Schweißung ebenso wie die chemische Zusammensetzung der Schienen vorgegeben ist, entsteht je nach der Schienenstahlqualität eine bestimmte Gefügestruktur und damit eine bestimmte Härteverteilung in den Wärmeeinflußzonen in Schienenlängsrichtung gesehen.

Bei der Schweißung von naturharten Schienen, die also von den Schienenherstellern keiner Wärmebehandlung nach dem Walzen unterzogen wurden, ergibt sich die Härteverteilung innerhalb der Wärmeeinflußzonen in Abhängigkeit von der chemischen Zusammensetzung des Schienenstahls. Die Legierungselemente C, Mn, V, Cr u.a. beeinflussen das Härteniveau über das Umwandlungsverhalten des Schienenstahls und/oder über die Karbid-Bildung. Die Härte der wärmeunbeeinflußten Schiene wird aber ebenfalls, nämlich während der Abkühlung nach dem Walzvorgang, nur über diese beiden Mechanismen gesteuert. Beim Schweißen solcher naturharter Schienen stellt sich daher unabhängig von der Schienenstahlanalyse in etwa stets der gleiche Differenzbetrag zwischen der Härte der unbeeinflußten Schiene und dem Härteverlauf in den Wärmeeinflußzonen ein. Der Differenzbetrag ist aus verschleißtechnischer Sicht bei solchen aluminothermischen Schweißungen zu tolerieren.

Im Fall einer wärmenachbehandelten, feinperlitisierten Schiene, bei der das Härteniveau nach dem Walzen "künstlich" angehoben wird, entsteht ein größerer Differenzbetrag in den Härten, da das ursprünglich feinlamellare Perlitgefüge zerstört wird und die Härteverteilung in den Wärmeeinflußzonen nach dem Schweißen sich dann automatisch wie bei einer geschweißten, naturharten Schiene mit 900 N/mm² Mindestzugfestigkeit ergibt. Dies ist bedingt durch die gleiche chemische Zusammensetzung der beiden Schienenstahlqualitäten.

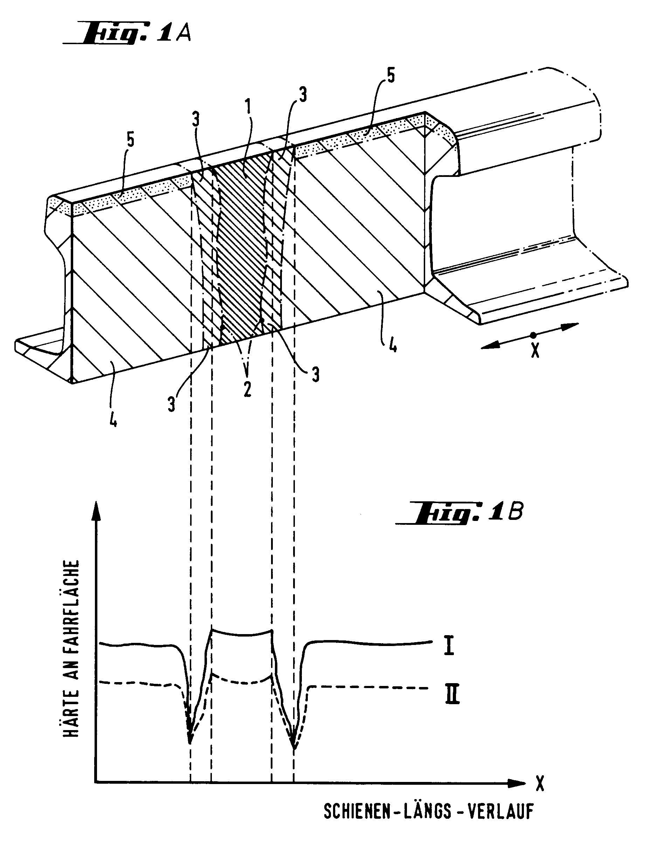

Im unteren Teil (Fig. 1B) der schematischen Darstellung von Figur 1 ist der jeweilige Härteverlauf an der Fahrfläche in Schienenlängsrichtung X dargestellt. Dabei entspricht I dem Härteverlauf einer Schweißung von feinperlitisierten (kopfgehärteten) Schienen und II dem Härteverlauf einer Schweißung von naturharten Schienen mit 900 N/mm² Mindestzugfestigkeit. Der Fahrspiegel der feinperlitisierten Schiene wird im Bereich der Wärmeeinflußzonen im Vergleich zum Schweißgut und der unbeeinflußten Schiene einem relativ stärkeren Verschleiß unterliegen als dies bei einer Schweißung von naturharten Schienen der Fall ist. Aus diesem Grund sind erhöhte Anforderungen an die Schweißtechnik für feinperlitisierte Schienen zu stellen.

In der Praxis haben sich zwei Verfahren zur aluminothermischen Zwischengußschweißung besonders bewährt und durchgesetzt. Es handelt sich dabei um die Verfahren entsprechend der DE-PS 22 08 692 und der DE-PS 21 61 134.

Das Verfahren gemäß DE-PS 22 08 692 ist gekennzeichnet durch die Kombination folgender Maßnahmen:
a) die Weite der Lücke zwischen den zu verschweißenden Schienenenden wird auf das 1- bis 2fache der Schienenstegdicke eingestellt;
b) der Hohlraum der Gießform wird derart gewählt, daß sich für den Schweißwulst eine Breite des 2- bis 4fachen und eine Tiefe des 0,15- bis 0,6fachen der Schienenstegdicke ergibt;
c) die Breite des Flammenbandes des Vorwärmbrenners wird auf das 1,5-bis 2,5fache der Schienenstegdicke eingestellt.

Diese Art der Durchführung der Schienenschweißung erfordert eine Vorwärmzeit der von den Formhälften umgebenen miteinander zu verschweißenden Schienenenden von etwa 6 bis 10 Minuten.

Das Verfahren gemäß der DE-PS 21 61 134 ist dadurch gekennzeichnet, daß die zu verschweißenden Schienenenden innerhalb eines Zeitraumes von maximal 2 Minuten auf eine Temperatur zwischen minimal 300°C und maximal 700°C vorgewärmt werden, wobei das Gewicht des aluminothermischen Gemisches 0,15 bis 0,25 Gewichtsteile des Metergewichtes der zu verschweißenden Schienen beträgt. Dieses Verfahren wird als Schweißverfahren mit kurzer Vorwärmung (SkV) bezeichnet.

Der mit der Kurzvorwärmung des SkV-Verfahrens verbundene steile Temperaturgradient in Schienenlängsrichtung bewirkt eine kleinere Ausdehnung der Wärmeeinflußzonen im Vergleich zu Verfahren mit normaler Vorwärmung. Der Abfall der Härte in den Wärmeeinflußzonen ist beim SkV-Verfahren dementsprechend auf ein in Schienenlängsrichtung gesehen kleineres Gebiet begrenzt, was sich günstig auf das Verschleißverhalten unter dem Fahrbetrieb auswirkt. Aus diesem Grund wird normalerweise das SkV-Verfahren beim Verschweißen feinperlitisierter Schienen bevorzugt eingesetzt. Bei Eisenbahnen, die ein Schweißverfahren mit einer erforderlichen Vorwärmdauer von 6 bis 10 Minuten als Regelverfahren benutzen, bedeutet dies, daß für die beim Verschweißen feinperlitisierter Schienen gewünschten schmalen Wärmeeinflußzonen ein zweites Verfahren, nämlich das SkV-Verfahren mit Kurzvorwärmung, einzuführen ist. Der dafür notwendige Geräteaufwand ist aus wirtschaftlicher Sicht als Nachteil zu bewerten, und es wäre wünschenswert, feinperlitisierte Schienen auch mit Schweißverfahren von langer Vorwärmdauer verbinden zu können, ohne daß dabei Nachteile entstehen.

Eine Verbesserung des Härteverlaufs in den Wärmeeinflußzonen kann auch in bekannter Weise durch eine zusätzliche Wärmebehandlung der Schiene im Schweißbereich erfolgen. Üblicherweise wird eine solche Wärmebehandlung - gleichgültig, ob ein aluminothermisches Schweißverfahren oder eine Abbrennstumpfschweißung durchgeführt worden ist - ausgeführt, wenn die Schweißung auf Umgebungstemperatur oder wenigstens auf eine Temperatur unterhalb 700°C abgekühlt ist, d.h. auf eine Temperatur, bei der die Austenit-Perlit-Umwandlung abgeschlossen ist. Mit einer geeigneten Gasbrennervorrichtung wird die Schweißung wieder austenitisiert und anschließend durch Beaufschlagung mit Druckluft, einem Druckluft-Wassergemisch oder einem gleichwirkenden Kühlmedium beschleunigt abgekühlt. Dieses Verfahren hat jedoch den Nachteil, daß es im verlegten Gleis schlecht durchführbar ist und zudem ein aufwendiger apparativer Aufwand erforderlich ist, der auf die Baustelle zu transportieren ist.

Der vorliegenden Erfindung liegt die Aufgabe zugrunde, ein Wärmenachbehandlungsverfahren aufzufinden, das gestattet, den Härteverlauf in den Wärmeeinflußzonen des fahrflächennahen Bereiches zu verbessern, ohne daß dabei ein Kühlmedium eingesetzt werden muß. Dies wäre zu umständlich. Dieses Verfahren sollte mit möglichst geringem apparativen Aufwand auf der Baustelle im verlegten Gleis durchführbar sein und ein hohes Maß an Betriebssicherheit aufweisen. Dabei spielt auch die Wirtschaftlichkeit eines solchen Verfahrens eine wesentliche Rolle.

Diese Aufgabe wird erfindungsgemäß dadurch gelöst, daß nach Erkalten der Schweißung die Fahrfläche der Schweißung und der angrenzenden Wärmebeeinflussungszonen von oben mittels eines Brenners schockartig über einen Zeitraum von 50 bis 150 Sekunden erwärmt wird, wobei der Brenner mit jeweils mindestens 10 000 l/Stunde Sauerstoff und 3500 l/Stunde Propan oder Acetylen beaufschlagt wird, und die Brennfläche des Brennerkopfes in einer Entfernung zur Fahrfläche der Schweißung und der Wärmeeinflußzonen von dem in mm gemessenen 0,1- bis 1fachen entsprechenden Wert des Zahlenwertes des Metergewichtes der verwendeten Schiene, gemessen in kg, positioniert wird.

Das erfindungsgemäße Verfahren ermöglicht eine Feinperlitisierung des schienenfahrflächennahen Bereiches von Schweißung und Wärmeeinflußzonen im Gleis unter Verzicht auf den Einsatz eines externen Kühlmittels. Die Abkühlung von Austenittemperatur erfolgt vielmehr durch die Schiene selbst. Es war überraschend, daß sich bei dem erfindungsgemäßen Verfahren die für die Feinperlitisierung spezifische Abkühlungsgeschwindigkeit und die gewünschte Härteverteilung in der Schweißung und den Wärmeeinflußzonen und damit im gesamten behandelten Bereich einstellen.

Bekannt sind Verfahren zur Erhöhung der Verschleißfestigkeit von Schienenfahrflächen durch Wärmebehandlung. Falls auf ein Kühlmedium verzichtet wird, handelt es sich dabei aber um Verfahren, die an naturharten - also nicht feinperlitisierten - Schienen ausgeführt werden, z.B. das in der Zeitschrift "Railway Engineering and Maintenance", Februar 1937, auf den Seiten 97 bis 99 beschriebene Verfahren. Hier wird eine Härtesteigerung erzielt, und damit ist auch ein besseres Verschleißverhalten zu erwarten, aber eben nicht darauf eingegangen, daß am Ende des wärmebehandelten Bereiches ebenfalls wieder eine weichgeglühte Stelle entstehen muß, die einen selektiven Verschleiß nach sich zieht. Dies wird hervorgerufen durch die Bildung des eingeformten, kugeligen und weichen Perlits aus dem ursprünglich lamellaren Perlit.

Im Falle einer aluminothermischen Schweißung in feinperlitisierten Schienen besteht nun aber die Notwendigkeit, einerseits eine hohe Härte auf und unter der Fahrfläche zu erzielen - und dies in einer aus verschleißtechnischer Sicht genügenden Tiefe von wenigstens bis zu 10 mm unter Fahrflächenniveau - und andererseits soll die Ausbildung eines erneuten Härtetals mit eingeformtem Perlit nicht in Längsrichtung verschoben werden, sondern grundsätzlich unterdrückt bzw. so weit wie möglich vermindert werden. Diese zweifache Zielsetzung, mit der Vorgabe, auf ein Kühlmedium zu verzichten, ist nicht Gegenstand jenes oben erwähnten Artikels in der Fachzeitschrift.

Für die gewünschte Feinperlitisierung der Schweißung und ihrer angrenzenden Wärmeeinflußzonen und der damit verbundenen Härtesteigerung zeigt sich, daß das erfindungsgemäße äußerst schnelle Einbringen der Wärme an der Schienenfahrfläche erforderlich ist. Am besten eignet sich ein leistungsstarker Gasbrenner 11, dessen Flammen 9 den fahrflächennahen Bereich der Schiene in kürzester Zeit auf Austenittemperatur bringen. Der weitaus größere Teil von dem Kopf, dem Steg und dem Fuß der Schweißung bzw. der Schiene bleiben jedoch kalt. Sobald die Brennerflamme entfernt wird, entziehen die kaltgebliebenen Teile dem austenitisierten Oberflächenbereich mit großer Geschwindigkeit die Wärme. Als Folge davon stellt sich das gewünschte feinperlitisierte Gefüge mit dem entsprechend hohen Verschleißwiderstand im fahrflächennahen Bereich der Schweißung und der Wärmeeinflußzonen ein, ohne daß dabei ein erneuter Härteabfall unerwünschten Ausmaßes am Rande des wärmebeaufschlagten Bereichs oder sonstwo auftritt. Entscheidend für den Erfolg des erfindungsgemäßen Verfahrens ist ferner, daß die Tiefe der feinperlitisierten Zone auf der einen Seite groß genug ist wegen des allgemeinen Verschleißes während der Befahrung, auf der anderen Seite aber begrenzt wird. Reicht nämlich der austenitisierte Bereich zu weit in den Schienenkopf hinein, wird die Wärme nicht rasch genug durch den restlichen Schienenquerschnitt entzogen. Trotz dieser Einschränkung zeigt sich in überraschender Weise, daß die Feinperlitisierung dennoch mit einer aus verschleißtechnischer Sicht ausreichenden Tiefe im Schienenkopf vorgenommen werden kann.

Die anzustrebende Abkühlgeschwindigkeit zur Ausbildung des feinlamellaren Gefüges in Schweißung und Wärmeeinflußzonen bis zu einer Tiefe von wenigstens 10 mm bei gleichzeitiger Unterdrückung eines hohen Härteabfalls am Rand der Wärmebehandlung wird durch ein schnelles Einbringen der Wärme über einen genau festgelegten Zeitraum und damit durch einen definierten Temperaturgradienten in vertikaler Richtung und durch eine festgelegte Tiefe der von der Schienenfahrfläche ausgehenden Austenitisierung bewirkt.

Als Gase für den Brenner sind Propan und Sauerstoff bevorzugt zu nennen. Der Arbeitsdruck des Sauerstoffs sollte möglichst groß gewählt werden, um eine schnelle Wärmezufuhr zu ermöglichen. Neben Propan und Sauerstoff sind auch Kombinationen, wie Acetylen/Sauerstoff oder Benzin/Sauerstoff u.a. denkbar.

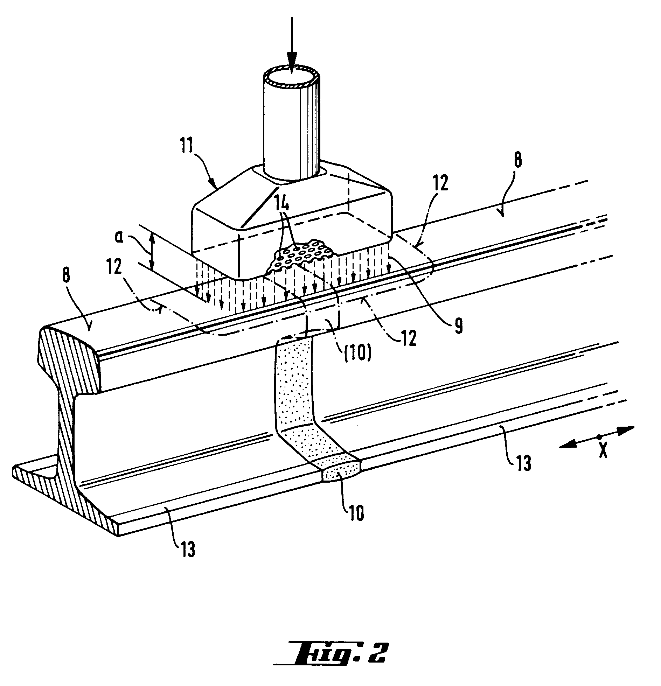

Besonders günstig (vergl. Fig. 2) ist eine senkrechte Zuführung der Gasflammen 9 direkt auf die Schienenfahrfläche 8. Für die definierte Wärmezufuhr existiert ein optimaler Brennerabstand a zur Fahrfläche 8 der Schiene 13. Entsprechend der vorliegenden Erfindung wird die Brennfläche des Brennerkopfes in einer Entfernung zur Fahrfläche der Schweißung und der Wärmeeinflußzonen positioniert, die, in mm gemessen, dem 0,1- bis 1fachen Wert des Zahlenwertes des Metergewichtes der verwendeten Schiene, gemessen in kg, entspricht. Bei einer Schiene mit einem Metergewicht von 60 kg beträgt somit der Abstand der Brennfläche des Brennerkopfes 6 bis 60 mm.

Von großer Bedeutung für das Gelingen der Feinperlitisierung ist, wie oben bereits ausgeführt, auch die Dauer der Wärmezufuhr, die auf den jeweiligen Brennertyp abzustimmen ist. Bei einem mit 5 bar Sauerstoff und 1,5 bar Propan betriebenen Brenner mit 78 Gasaustrittsbohrungen von je 1 mm Durchmesser im Brennerkopf und einem Durchsatz von 18 000 l Sauerstoff pro Stunde und 6000 l Propan pro Stunde ist z.B. eine Wärmedauer von 10 Sekunden zu kurz, die Austenitisierungstemperatur wird nicht erreicht. Auch ein nur kurzfristiges Erreichen der Austenitisierungstemperatur ist nicht empfehlenswert, da dann bei zu geringer Tiefenwärme die Abkühlgeschwindigkeit zu hoch ist, mit der Folge der Ausscheidung von unerwünschtem Härtungsgefüge. Zeiten von mehr als 180 Sekunden sind bei diesem Brenner ebenfalls ungünstig, da die Tiefenwärme in der Schiene zu groß wird und die spätere Abkühlung zu langsam erfolgt. Je nach Brennerart und Brennergasen bzw. -drücken gibt es somit eine günstige Zeitdauer der Wärmezufuhr. Bei leistungsstarken Brennern ist dies meist eine Zeitdauer zwischen 50 und 150 Sekunden.

Eine bevorzugte Ausführungsform des erfindungsgemäßen Verfahrens besteht darin, daß als Zeitraum für die Erwärmung bei Schienen mit einem Metergewicht von 45 bis 70 kg 80 bis 120 Sekunden gewählt wird und die Brennfläche des Brennerkopfes in einer Entfernung von dem in mm gemessenen 0,3- bis 0,7fachen entsprechenden Wert des Zahlenwertes des Metergewichtes der Schiene, gemessen in kg, positioniert wird.

Die Zusammensetzung des Zwischengußbereiches muß der Zusammensetzung der feinperlitisierten, zu verschweißenden Schiene entsprechen, damit ein gleiches Umwandlungsverhalten vorliegt und sich eine gleichmäßige Härteverteilung ergibt. Die Schweißportion muß also entsprechend legiert sein. Der Schweißvorgang führt dementsprechend zunächst zu einem Zwischengußbereich, der härtemäßig etwa einer Schweißung mit naturharten Schienen mit 900 N/mm² Mindestzugfestigkeit entspricht. Auch die Wärmeeinflußzonen entsprechen einer Schweißung an solchen Schienen, da ja die feinperlitisierte Schiene in ihrer chemischen Zusammensetzung der Schiene mit 900 N/mm² Mindestzugfestigkeit entspricht. Nach Abkühlung der Schweißung 10 auf Umgebungstemperatur wird nun der Brenner 11 angesetzt und gezündet. Die Gasflammen 9 erfassen dabei die Schweißung 10, beide Wärmeeinflußzonen und darüber hinaus noch Bereiche 12 der von der Schweißung 10 nicht beeinflußten Schienen 13 (s. Fig. 2); also einen Bereich, der größer ist als der Abstand der beiden Härtetäler zueinander (Fig. 1A und 1B).

Den Gegebenheiten der Baustelle ist insofern Rechnung zu tragen, daß die dort herrschenden unterschiedlichsten Witterungsverhältnisse keinen Einfluß auf die Güte der Feinperlitisierung haben. Insbesondere würden z.B. scharfe, kalte Winde zu unzulässig hohen Abkühlungsgeschwindigkeiten führen. Dies kann durch einen entsprechenden Windschutz vermieden werden.

Das Wärmebehandlungsverfahren der beschriebenen Art läßt vorteilhafterweise nun auch den Einsatz von aluminothermischen Schweißverfahren mit längerer Vorwärmdauer für feinperlitisierte Schienen ohne Nachteil zu, da ja die dann größer anfallenden Wärmeeinflußzonen ebenfalls in die Wärmebehandlung einbezogen und somit aufgehärtet werden.

Daß am Rande der Wärmebehandlung nicht wieder ein starker Härteabfall entsteht, muß mit der kurzen Zeitdauer erklärt werden, in der dieses Gebiet einem Temperaturbereich von 600 bis 700°C ausgesetzt ist. Dadurch kann das perlitische Gefüge sich nicht einformen und die kugelige, weiche Struktur annehmen. Dies wird durch die kurze, aber schnelle Wärmezufuhr, die dennoch eine genügend große Tiefe der Durchhärtung von der Fahrfläche ausgehend erzielt, ermöglicht. Bei der Ermittlung der Parameter, wie Gasdrücke, Fließgeschwindigkeit, Abstand des Brenners zur Fahrfläche und chemische Zusammensetzung des Schweißgutes bzw. der Portion, mußte ein optimaler Weg gefunden werden, um die gewünschten Eigenschaften zu erzielen. Dabei ist ferner insofern die Größe bzw. Masse der Schiene von Bedeutung, weil größere Schienen einer größeren Wärmezufuhr bedürfen und bei kleineren Schienen eine geringere Wärmezufuhr zu beachten ist.

Im folgenden wird das erfindungsgemäße Verfahren durch ein Beispiel und anhand Fig. 2 noch näher erläutert.

Es wird eine Schiene 13 der feinperlitisierten Güte mit folgender chemischer Zusammensetzung in Gewichtsprozent verwendet:
- C: - 0,78
- Mn: - 1,06
- Si: - 0,28
- P: - 0,01
- S: - 0,01
- Cr: - 0,04
- Ni: - 0,03
- V: - 0,005
Rest Fe und erschmelzungsbedingte Verunreinigungen.

Diese Schiene 13 weist eine durchschnittliche Fahrflächenhärte von 345 HV auf. Die Wärmebehandlung erfolgt von oben auf die Schienenfahrfläche 8 nach Abkühlung der Schweißung 10 auf Umgebungstemperatur mit dem bereits beschriebenen Sauerstoff/Propan-Brenner (Arbeitsdrücke 5 bar Sauerstoff, 1,5 bar Propan, Brennerkopf 11 mit 78 Bohrungen 14 à 1,0 mm Durchmesser, Durchsatz 18 000 l Sauerstoff pro Stunde und 6000 l Propan pro Stunde). Der Abstand a zwischen dem Brennerkopf 11 und der Schienenfahrfläche 8 beträgt 25 mm, die Dauer der Wärmezufuhr 100 Sekunden. Die austenitisierte Fahrfläche 8 kühlt anschließend unter dem Schutz einer Abdeckhaube ab.

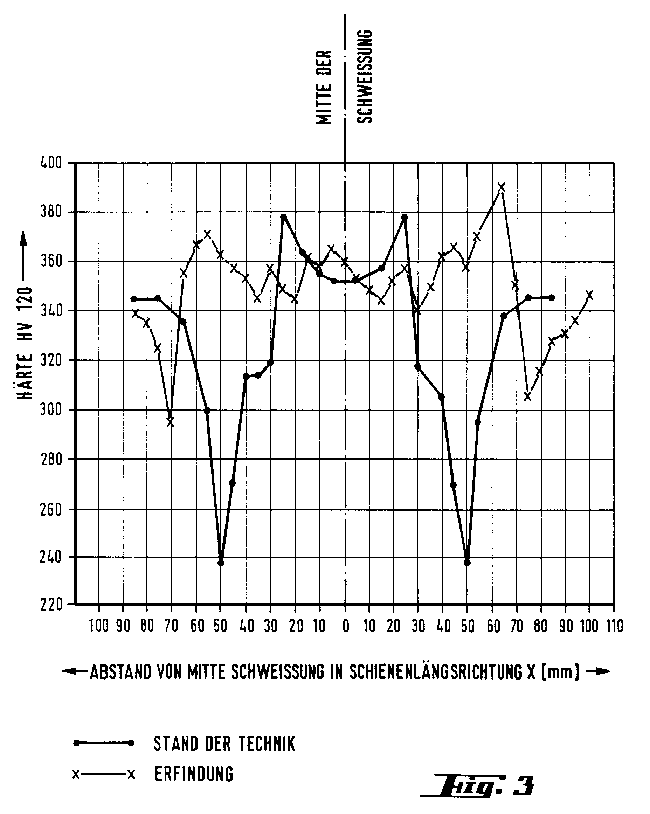

Das Diagramm gemäß Fig. 3 zeigt als Ergebnis der erfindungsgemäßen Wärmebehandlung die Aufhärtung der Fahrfläche von Schweißung und Wärmeeinflußzonen in Schienenlängsrichtung (Kurve IV). Gegenüber einer unbehandelten Schweißung, die nach dem Stand der Technik mit dem SkV-Verfahren (Kurve III) und einem Einsatz einer hochlegierten Portion herzustellen wäre, ergeben sich infolge der Wärmebehandlung nur noch sehr gemäßigte Härtetäler.

## Patentansprüche

1. Verfahren zur Zwischengußschweißung feinperlitisierter Schienen (13) durch Eingießen aluminothermisch erzeugten Stahles in eine die beiden Schienenenden umgebende Gießform, dadurch gekennzeichnet, daß nach Erkalten der Schweißung (10) die Fahrfläche der Schweißung (10) und der angrenzenden Wärmebeeinflussungszonen von oben mittels eines Brenners (11) schockartig über einen Zeitraum von 50 bis 150 Sekunden erwärmt wird, wobei der Brenner (11) mit jeweils mindestens 10 000 l/Stunde Sauerstoff und 3500 l/Stunde Propan oder Acetylen beaufschlagt wird, und die Brennfläche des Brennerkopfes in einer Entfernung zur Fahrfläche (8) der Schweißung und der Wärmeeinflußzonen von dem in mm gemessenen 0,1- bis 1fachen entsprechenden Wert des Zahlenwertes des Metergewichtes der verwendeten Schiene, gemessen in kg, positioniert wird.

2. Verfahren nach Anspruch 1, dadurch gekennzeichnet, daß als Zeitraum für die Erwärmung bei Schienen mit einem Metergewicht von 45 bis 70 kg 80 bis 120 Sekunden gewählt wird und die Brennfläche des Brennerkopfes (11) in einer Entfernung von dem in mm gemessenen 0,3- bis 0,7fachen entsprechenden Wert des Zahlenwertes des Metergewichtes der Schiene, gemessen in kg, positioniert wird.

## Claims

1. Process for the intermediate cast welding of finely perlitic rails (13) by pouring aluminothermically produced steel into a casting mould surrounding the two ends of the rail, characterized in that, after the weld (10) has cooled, the wheel-contact surface of the weld (10) and the adjoining heat-affected zones are heated in a shock-like manner from above by means of a torch (11) for a period of 50 to 150 seconds, the torch (11) being supplied with in each case at least 10,000 l/hour of oxygen and 3500 l/hour of propane or acetylene, and the combustion surface of the torch head being positioned at a distance from the wheel-contact surface (8) of the weld and of the thermal influence zones equal to a value, measured in mm, corresponding to 0.1 to 1 times the numerical value of the weight per metre of the rail used, measured in kg.

2. Process according to Claim 1, characterized in that 80 to 120 seconds is chosen as the period for heating in the case of rails with a weight per metre of 45 to 70 kg, and the combustion surface of the torch head (11) is positioned at a distance equal to a value, measured in mm, corresponding to 0.3 to 0.7 times the numerical value of the weight per metre of the rail, measured in kg.

## Revendications

1. Méthode de soudage par coulée intermédiaire de rails (13) recuits de microperlitisation par coulée d'acier produit par aluminothermie dans un moule entourant les deux extrémités de rails, caractérisée par le fait qu'après refroidissement de la soudure (10) la surface de roulement de la soudure (10) et des zones influencées thermiquement adjacentes est chauffée par dessus au moyen d'un brûleur (11), à la manière d'un choc, pendant un laps de temps de 50 à 150 secondes, le brûleur (11) étant alimenté par, respectivement, au moins 10 000 l/heure d'oxygène et 3 500 l/heure de propane ou d'acétylène, et la surface de combustion de la tête de brûleur étant positionnée à une distance de la surface de roulement (8) de la soudure et des zones influencées thermiquement dont la valeur, mesurée en millimètres, est de 0,1 à 1 fois la valeur numérique du poids au mètre du rail utilisé, mesuré en kg.

2. Méthode selon la revendication 1, caractérisée par le fait que le laps de temps pour le chauffage de rails ayant un poids au mètre de 45 à 70 kg est choisi de 80 à 120 secondes et la surface de combustion de la tête de brûleur (11) est positionnée à une distance dont la valeur, mesurée en mm, est de 0,3 à 0,7 fois la valeur numérique du poids au mètre du rail, mesuré en kg.
